# EUROPEAN PATENT SPECIFICATION

(11) **EP 1 025 489 B1**
(45) Date of publication and mention of the grant of the patent: **02.06.2004**
(21) Application number: 98949704.5
(22) Date of filing: 01.10.1998
(51) Int. Cl.: G06F 9/44

(54) **SYSTEM TO ASSOCIATE CONTROL WITH APPLICATIONS USING DRAG AND DROP INTERFACE**
VERFAHREN ZUR ASSOZIIERUNG VON GUI-KOMPONENTEN ZWISCHEN ANWENDUNGEN MITTELS EINER DRAG-UND-DROP SCHNITTSTELLE
SYSTEME PERMETTANT D'ASSOCIER UNE COMMANDE A DES APPLICATIONS AU MOYEN D'UNE INTERFACE GLISSER-DEPOSER

(30) Priority: 21.10.1997 US 955518
(43) Date of publication of application: 09.08.2000
(73) Proprietor: Ericsson Inc., Plano, TX 75024 (US)
(72) Inventor: MOON, Billy, G., Apex, NC 27502 (US); BANKLER, Brian, Cary, NC 27511 (US)
(74) Representative: O'Connell, David Christopher
(86) International application number: PCT/US1998/020663
(87) International publication number: WO 1999/021084

(56) References cited:
- EP-A- 0 717 342
- "ENABLING OF CONTROLS FOR PARTICIPATION IN DIRECT MANIPULATION" IBM TECHNICAL DISCLOSURE BULLETIN, vol. 33, no. 6A, 1 November 1990, page 463/464 XP000107792
- "EXTENDING RUNTIME DRAG/DROP FLEXIBILITY" IBM TECHNICAL DISCLOSURE BULLETIN, vol. 38, no. 1, 1 January 1995, page 487/488 XP000498845

## Description

### BACKGROUND OF THE INVENTION

### 1. Field of the Invention

This invention relates to the field of computer software interface methods and more particularly, to a method of improving an application.

### 2. The Prior Art

Many computer applications operate by using similar functions. For example, most applications perform operations on files and therefore provide the user with functions to Open a file, Create a New file, Save a file and Save a file under a different name. Before object-oriented technology became widely used, improvements to applications took a long time to implement. A user of an application could not add improvements to the application unless the source code of the application was available to the user. But, even with the source code, the improvements to an application required a change or changes to the source code, followed by a cycle of debugging and re-building until the improved application worked properly. Users without the source code had to wait months or years for improvements in the form of new versions of the application. Moreover, improvements made by the publisher are out of the control of the user. Applications may end up having improvements in which the user may have no interest or lack all of the improvements the user wanted.

The advent of object oriented coding made it possible for users to write objects that deal with a specific problem (for example, in the case of the File Open function, determining the file name for the file the user wishes to Open). For the most part, however, even object-oriented systems do not allow users to add a control onto an existing program. Moreover, even object-oriented systems have compile and re-build stages and most users still wait for improvements months later.

Some publishers have provided applications that can modify other applications during installation. A new application with new functions can be used to update an existing application that can be improved by incorporation of the new functions. The update is accomplished with programs that can modify the code of the existing application. The programs are inserted into the existing application during the installation. For example, some programs have code in the installation package that will prompt a user for whether or not to add a menu option (and hot key) onto Microsoft Word. The problem is that the update requires an installation, and it requires for the new program to have extensive knowledge of how the first program works (how it's menus and hot keys are set up, as well as knowledge of how it inserts things).

It is further known to have drag and drop operations in a GUI-based environment. EP 0 717 342 teaches a modified drag and drop operation. More specifically, EP 0 717 342 discloses :
a method for moving an object from a source to a target program, whereby
   - the object is dragged from the source to the target program
   - the operational compatibility of the object with the target program is checked.

It would be desirable for a user to be able to add an improvement to an application after the program's distribution and without having to re-compile the code.

It would be desirable for a user to be able to add an improvement to an application by duplicating such an improvement from a different program.

### SUMMARY OF THE INVENTION

In view of the above, the present invention is directed to a system for adding features to applications in a computer system comprising a processing unit, a selecting device responsive to a user, and a display screen as defined by claim 14. The system includes an application executing in the processing unit. The application is represented by a display window and has an application interface.

A control representation having a control interface is included in the system. The control representation is operative to execute a control function when the control representation is selected by a user with the selecting device. The control representation is movable to the application by user action, and is further operative to execute the control function during execution of the application when the application interface is compatible with the control interface. In this manner, a control function not previously available to the application is made part of the application.

The present invention is further directed to a method of updating a control to an application having the steps of providing a display window and an application interface for the application on display screen and providing a control representation for performing a function not available to the application as defined by claim 1. The control representation has a control interface and a control image in a part of the display screen separate from the display window of the application. The user picks the control representation by holding a pointer over the control image, moving the control image to an area in the application display window and releasing the control representation in the area in the application display window. The function associated with the control representation is then enabled.

It is accordingly an object of the present invention to provide a system that allows a user to add improvements to an application without having to change and re-compile code.

It is further an object of the present invention to provide a system that allows a user to add a function in one application to another application by moving an object representative of the function from one application to the other application.

### DESCRIPTION OF THE DRAWINGS

The foregoing features, objects and advantages of the invention will become apparent to those skilled in the art from the following detailed description when considered in connection with the accompanying drawings, in which like reference numerals designate like parts throughout the figures thereof:
FIG. 1 is a block diagram of a computer system in which the present invention finds particular use.
FIG. 2 is a display screen having display windows for two applications.
FIG. 3 is a magnified view of the display screen in FIG. 2, after moving a control icon from one program to another according to the invention.
FIG. 4 is a flow chart of a preferred method according to the present invention.
FIG. 5 is pseudo-code for implementing the flow chart in FIG. 4.
FIG. 6 is pseudo-code for implementing an alternative method of verifying a shared interface in the flow chart of FIG. 4.
FIG. 7A and 7B are Java listings of different classes in different applications that accomplish the same tasks.

### DESCRIPTION OF THE PREFERRED EMBODIMENT

The description that follows refers to the drawings where like elements are identified by like numerals throughout. Although a presently preferred system is described, it can be appreciated by one of ordinary skill in the art that different embodiments are possible without departing from the scope of the invention.

Improvements in object-oriented technology have resulted in the proliferation of graphical user interfaces in computer systems. Graphical user interfaces have made computers easier to use by disposing of the need to learn complex instruction and command sets. In the place of instruction and command sets are pictures or objects and selecting and pointing devices. The ease of looking at pictures and selecting objects that convey that a function is to be performed by selecting the object reduces the time to master applications.

While graphical user interfaces have been spawned by improvements in object-oriented technology, function-oriented software has not completely disappeared. Much of the software being developed includes elements of both object-oriented and function-oriented software. Although the description that follows focuses on an object-oriented system, one of ordinary skill in the art will appreciate that the use of function-oriented elements to carry out the objectives of the present invention is within the scope of the invention.

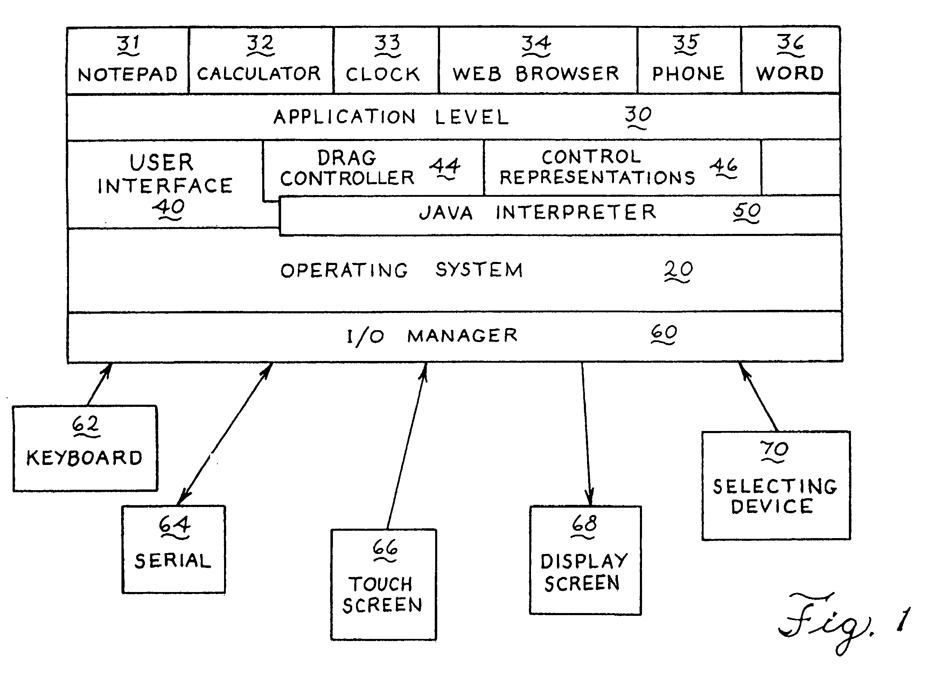

FIG. 1 is a block diagram of a computer system **10** in a preferred embodiment of the present invention. The computer system **10** in FIG. 1 includes an operating system **20,** an application level **30,** a user interface **40,** a drag controller **44,** a Java interpreter **50,** and an I/O manager **60.** The computer system **10** may be any computer system using any processor. In a preferred embodiment, the computer system **10** operates using a processor (not shown) with sufficient power and speed to handle the drawing and redrawing of hundreds of images per minute. The memory (not shown) must be sufficient to handle the large amounts of memory which image data traditionally occupies.

The operating system **20** manages basic services, such as memory, clock, initialization and power management. The operating system in a preferred embodiment includes access to a graphical user interface. The operating system preferably includes multi-tasking features such as real-time preemptive multi-processing. One example of such an operating system is the OS-9000 operating system.

The application level **30** includes all computer applications that have been installed to run on the computer. These applications include a notepad **31,** a calculator **32,** a clock **33,** a web browser **34,** a phone **35** and a word processing program **36.** All applications are preferably written in the same object-oriented programming language to ensure portability. Applications are programmed as objects in an object-oriented environment. The objects for applications preferably include an interface which defines the methods or functions performed by the application. In a preferred embodiment, all applications are written in the Java programming language. More information on the Java programming language may be obtained by referring to Amold and Gostling, *The Java Programming Language,* Addison-Wesley, 1996.

The I/O manager **60** provides an interface between the rest of the system and the input/output devices. In the computer system **10** in FIG. 1, the I/O manager **60** interfaces with a keyboard **62,** a serial line **64,** a touch screen **66,** a display screen **68,** and a selecting device **70.** The selecting device **70** is understood to include any device able to control a pointer on the screen and to select and invoke screen objects, such as a mouse, a roller ball with buttons, a touch pad, and any other suitable device.

The user interface **40** causes icons or graphic images of objects to be displayed on the display screen and invokes functions associated with the object when the user selects the objects on the screen with the pointer. The graphic images used for objects may include buttons, scroll bars, drop-down menus, radio buttons and other well known objects. In a preferred embodiment, the user interface **40** invokes functions associated with classes defined in Java.

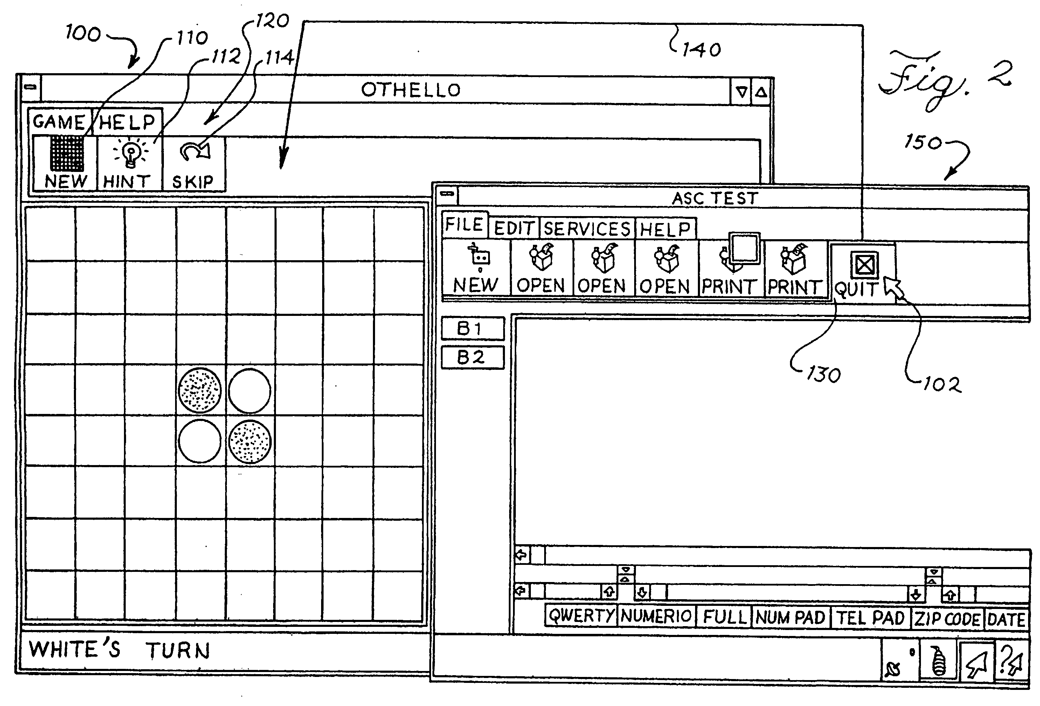

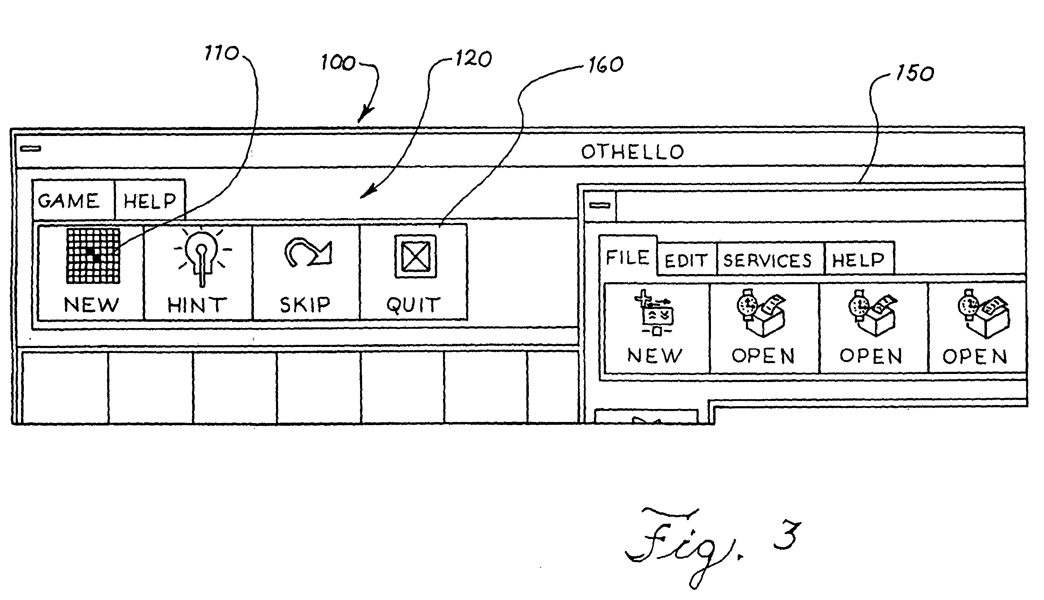

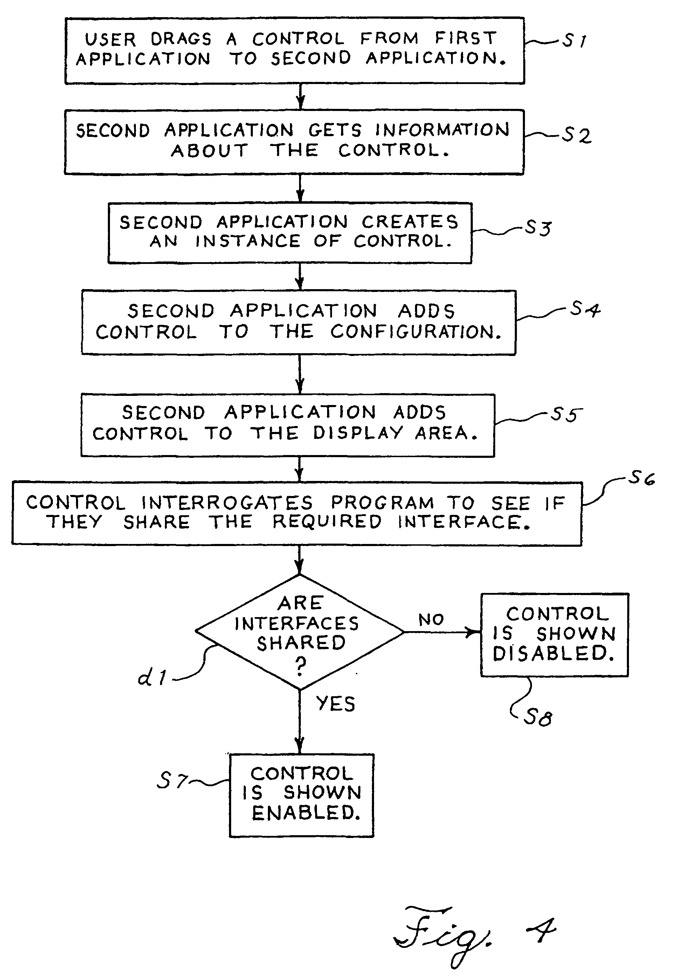

Objects may be displayed and included as control representations **46** in an application to provide a way for a user to easily invoke the functions performed by the application. The user interface **40** enables the user to select the control representations **46** to perform the function associated with it. Each control representation **46** includes a control interface which defines the methods or functions performed by the application. In a preferred embodiment, each control representation **46** implements a process of verifying the extent to which the functionality or, the interface of any application into which it is dropped matches its own control interface. As described further with reference to FIG. 4, the control representation **46** verifies functionality by ensuring that the application into which it is dropped performs all of the methods performed by the control representation **46.**

In a preferred embodiment, the user interface **40** includes a drag controller **44** for carrying out the movement of an object from one location of the screen to another. The drag controller **44** operates as a central location for handling information used in the movement of an object. Preferably, the drag controller **44** stores information about the object selected by the user for movement. The drag controller **44** also determines whether a target object such as an application into which a control representation **46** is to be moved can accept a control representation **46.**

The Java Interpreter **50** converts classes and applications into a native code that is to be executed by the processor. In alternative embodiment, programming languages that may or may not use an interpreter may be used.

FIGs. 2 and 3 illustrate an example of how the computer system **10** in FIG. 1 allows a user to drag and drop controls between applications. FIG. 2 depicts two display windows **100** and **150** for two applications. The first display window **100** is for a game application and the second display window **150** belongs to a debugger application. The first display window **100** includes a control panel **120** which is an object that contains control representations labeled NEW **110,** HINT **112** and SKIP **114.**

It appears as though the game application of display window **100** was shipped without a QUIT function. Rather than changing source code and then re-compiling the code, the user can by the present invention add the QUIT function by picking it from an application having a QUIT function, if the control interface for the QUIT function is the same as that of the game application. The user adds the function by selecting the control representation for QUIT **130** in the second display window **150** using a pointer **102,** moving the control representation along a path such as that at **140,** and dropping it in the control panel **120** of the first display window **100.** FIG. 3 shows the new control representation **160** in the control panel **120**. The QUIT function then is enabled such that the game application stops functioning when the control representation is pressed.

The QUIT function is enabled because the QUIT control representation and the application have the same interface, which means that each can execute certain transactions. For example, if the user desired to transfer a spell-checking function from one application to another, the spell-checking control would have to be able to ask for a document and how to return the new (changed) document. The application receiving the spell-checking control does not need to know how the spell checker works. The application has an interface that views the control as an object with which it can exchange documents.

At a later time, another control representation may be written using the same interface for a new application. For example, a new application may include a translate to French control for translating an English document to French. It could be dragged and dropped into an existing application in the manner illustrated in FIGs. 2 and 3 and perform properly. One advantage of the process illustrated in FIGs. 2 and 3 is that the French translation function may be added without having to undergo an installation procedure of another program and without modifying and re-compiling the source code to the application.

It may be possible that the existing application may not share an interface with the control interface of the control representation (e.g. the translate to French control). In such a case, the program would not know how to perform certain functions such as how to exchange documents. In that case, the control could still be dragged and dropped in the program; however, the control representation would sense the lack of compatibility and disable itself since it could not communicate with the existing application.

FIG. 4 illustrates a flow chart of the process described in FIGs. 2 and 3. At step **s1,** the user starts dragging a control from the first application to the second application. As soon as the dragging starts, the object registers itself with the Drag Controller **44** (shown in FIG. 1). As the control moves, the Drag Controller **44** communicates with other objects on the screen to determine if the current location is a valid drop location or not. The user releases the control representation on a new control panel **120** (shown in FIG. 2) that can accept it. At step **s2,** the Drag Controller **44** sends the control to the control panel **120.** At step **s3,** the second application creates an instance of the control. In creating the instance, the second application copies the control object and begins to interface with it. At step **s4,** the panel **120** receives configuration information from the control, so that it may be saved in the application's configuration. At step **s5,** the panel places the control in itself and adjusts its own re-layout, if necessary, to make sure that all controls are visible and displayed properly. At step **s6,** the control then interrogates the application to determine if it has all the necessary methods for the control. At decision block **d6,** if the interfaces are shared, then at step **s7,** the control is enabled. At decision block **d6,** If the interfaces are not shared, then the control disables itself at step **s8.**

In step s6 in FIG. 4, the control goes through each interface, or method (or process, function, message, etc.) that it will need and attempts to find the same method defined in the application. The control does not need to obtain the implementation of each method, only its definition.

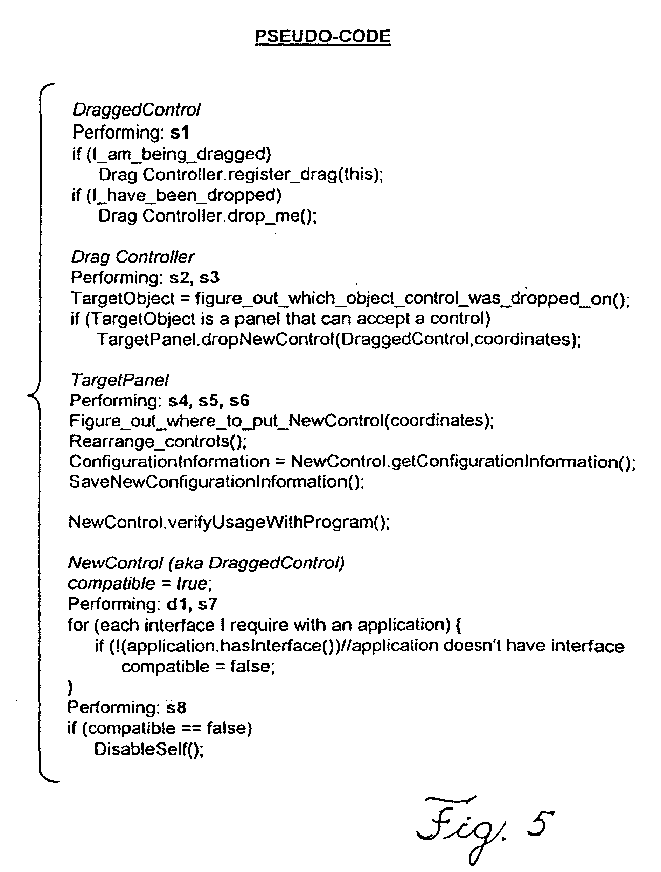

The flow chart in FIG. 4 may be implemented using code similar to the pseudo-code shown in FIG. 5. FIG. 5 denotes the steps performed and the objects performing the steps.

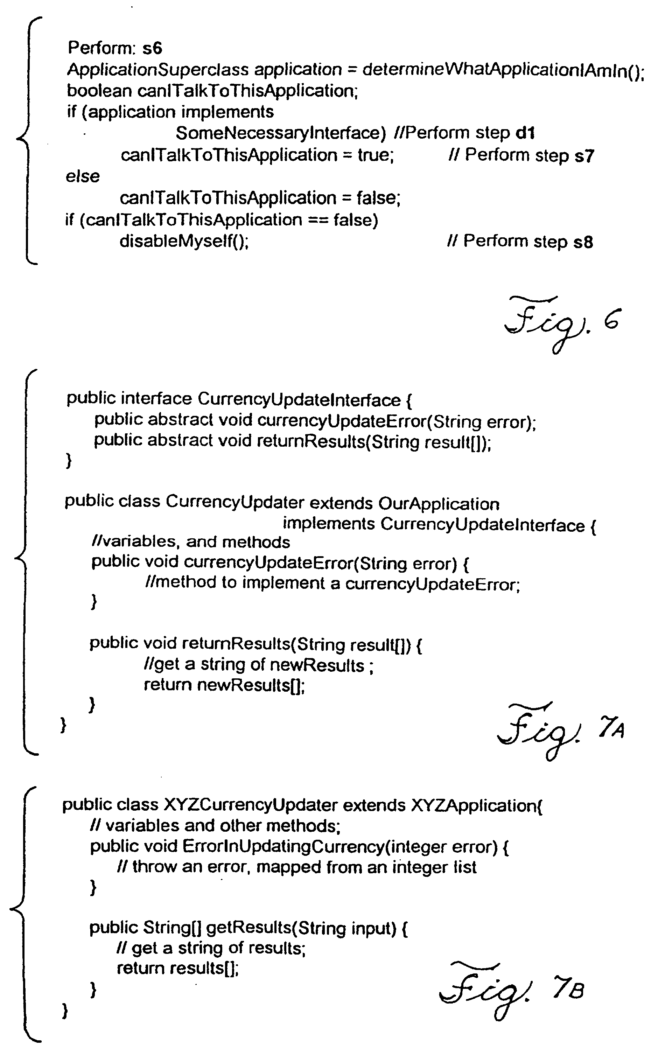

Alternative implementations to step s6 may be used to determine if an application and a control share sufficient functionality. For example, the process in step s6 may be simplified by taking advantage of standard interfaces, such as the CUT/COPY/PASTE interface. If the control representation 46 determines that a function (e.g. the CUT function) of the standard interface is shared, the functionality of the standard interface is assumed to be shared. The Java keyword *implements* may be used to determine if functionality is shared. An example of the use of *implements* is illustrated by the pseudo-code in FIG. 6. The pseudo-code in FIG. 6 may be used at step s6 in the flow chart in FIG. 4.

Controls may get information needed to determine if it shares sufficient functionality with the application from the applications Class. Much as an interface defines what methods exist in a class, the class also defines what methods exist. The class however, defines the description of the methods as well. For example, FIG. 7A is a Java listing for a class called "CurrencyUpdateInterface."

If a control requires those methods in an application, it could test for this by executing:

### Line 1: if (application implements CurrencyUpdateInterface) ...

Assume that a commercial package by company XYZ exists as defined in FIG. 7B. A comparison between FIGs. 7A and 7B shows that the two CurrencyUpdaters do the same thing. But, because the interface is different, the control will not enable itself in the application. XYZ's product can be made to work in the program in FIG. 7A by using the following:

### Line 2: if ( (application implements CurrencyUpdater) *or* (application instanceof XYZCurrencyUpdater)) ...

By adding line 2 to program XYZ, as the program of this invention accomplishes, both interfaces will be supported.

It is to be appreciated by one of skill in the art that alternative embodiments are possible without departing from the scope of the present invention. Further, a wide range of changes and modifications can be made to the preferred embodiments described above. It is therefore intended that the foregoing description illustrates rather than limits this invention, and that it is the following claims, including all equivalents, which define this invention.

## Claims

1. A method for operating a computer system having a processor, a cursor pointing device, a display screen and an operating system for running different programs in windows of the display device and implementing drag and drop operations for objects of said programs, said method moving a selected object being operative to excute a control function from an originating program to at least one target program for independent operation in the target program without re-compiling the program, said method comprising the steps of:
simultaneously executing the originating program and at least one target program in separate display windows of said operating system;
dragging a selected control object of said originating program to said target program;
checking the operational compatibility of the selected control object with the target program;
automatically attaching executable code of the selected control object to the target program; and
selectively running the executable code of the control object when the control object is actuated in the target program.

2. The method of claim 1, wherein said step of dragging includes moving an icon representative of the control object from the originating program to the target program.

3. The method of claim 1, wherein said step of dragging includes dragging an icon representative of the control object from the originating program and dropping said icon in a display portion of the target program.

4. The method of claim 3, further including the step of disabling the control object in the target program if the originating and target programs have incompatible control interfaces.

5. The method of claim 1, wherein said selectively running step includes the step of operating the control object in the target program only if the originating and target programs have compatible control interfaces.

6. The method of claim 1, wherein said step of dragging includes dragging an icon representative of the control object from a control panel portion of the window of the originating program and dropping it in a control panel portion of the window of the target program.

7. The method of claim 1, wherein said originating and target programs are written in the Java programming language.

8. The method of claim 1, wherein said step of dragging includes:
dragging an icon representative of the control object from a displayed window of the originating program;
registering the control object with a drag controller;
dropping the icon representative of the control object on a portion of a displayed window of the target program that can accept it; and
creating an instance of the control object in the target program.

9. The method of claim 8, wherein the step of creating an instance of the control object includes copying the control object to the target program, interfacing with it and displaying an icon representative of the control object in a window of the target program.

10. The method of claim 8, further including the step of interrogating the interfaces of the target program and enabling the control object for operation in the target program if required interfaces are present.

11. The method of claim 10, further including the step of disabling the control object if the target program does not have the required interfaces.

12. The method of claim 1, wherein said step of checking includes:
maintaining a plurality of control interfaces for the control object;
searching said plurality of control interfaces for an interface compatible with the target program; and
designating a control interface for the control object which is compatible with the target program.

13. The method of claim 12, further comprising the steps of:
defining a new control interface; and
adding the new control interface to said plurality of control interfaces.

14. A system for adding control objects to software applications, comprising:
a computer system having a processing unit, a selecting device responsive to a user, and a display screen;
a first application executing in the processing unit and represented by a first display window on the display screen, the application having an application interface;
a second application executing in the processing unit and represented by a second display window on the display screen, the second application including a control object and having a control interface, the control object being operative to execute a control function when said control object is selected by a user with the selecting device;
the processing unit and selecting device having means for moving a copy of said control object from said second application to said first application and attaching said copy of the control object to the first application;
the attached control object of the first application being operable in independent operation of the first application when the interface of the first application is compatible with the control interface of the second application.

15. The system of claim 14, wherein the control object copied to the first application includes an interface control program for maintaining a plurality of interface definitions and checking the first application interface for corresponding definitions before enabling the function of the control object in the first application.

16. The system of claim 15, wherein the control object enables the operation of its function by verifying that the interface of the first application is compatible with at least one of said plurality of interface definitions of the control object.

## Patentansprüche

1. Ein Verfahren zum Betreiben eines Computersystems mit einem Prozessor, einem Cursor-Zeigegerät, einem Anzeigeschirm und einem Betriebssystem zum Ablaufenlassen von verschiedenen Programmen in Fenstern des Anzeigegeräts und zum Implementieren von Zieh- und Ablegebetrieben für Objekte des Programms, wobei das Verfahren ein zum Ausführen einer Steuerfunktion betreibbares ausgewähltes Objekt von einem Ursprungsprogramm zu mindestens einem Zielprogramm bewegt, für einen unabhängigen Betrieb in dem Zielprogramm ohne Neukompilieren des Programms, wobei das Verfahren die Schritte umfasst:
simultanes Ausführen des ursprünglichen Programms und mindestens eines Zielprogramms in separaten Anzeigefenstern des Betriebssystems;
Ziehen eines ausgewählten Steuerobjekts des Ursprungsprogramms zu dem Zielprogramm;
Überprüfen der betriebsfähigen Kompatibilität des ausgewählten Steuerobjekts mit dem Zielprogramm;
automatisches Anbringen von ausführbarem Code des ausgewählten Steuerobjekts an das Zielprogramm; und
selektives Ablaufenlassen des ausführbaren Codes des Steuerobjekts, wenn das Steuerobjekt in dem Zielprogramm in Bewegung gesetzt wird.

2. Das Verfahren nach Anspruch 1, wobei der Schritt des Ziehens ein Bewegen eines für das Steuerobjekt typischen Icons von dem Ursprungsprogramm zu dem Zielprogramm enthält.

3. Das Verfahren nach Anspruch 1, wobei der Schritt des Ziehens ein Ziehen eines für das Steuerobjekt typischen Icons von dem Ursprungsprogramm enthält, sowie ein Ablegen des Icons in einem Anzeigeteil des Zielprogramms.

4. Das Verfahren nach Anspruch 3, ferner enthaltend den Schritt, Deaktivieren des Steuerobjekts in dem Zielprogramm, falls das Ursprungs- und Zielprogramm inkompatible Steuerschnittstellen aufweisen.

5. Das Verfahren nach Anspruch 1, wobei der selektive Ablaufschritt den Schritt enthält zum Betreiben des Steuerobjekts in dem Zielprogramm nur dann, wenn das Ursprungs- und Zielprogramm kompatible Steuerschnittstellen aufweisen.

6. Das Verfahren nach Anspruch 1, wobei der Schritt des Ziehens ein Ziehen eines für das Steuerobjekt typischen Icons von einem Bedienfeldteil des Fensters des Ursprungsprogramms enthält, sowie Ablegen desselben in einem Bedienfeldteil des Fensters des Zielprogramms.

7. Das Verfahren nach Anspruch 1, wobei das Ursprungs- und Zielprogramm in der Programmiersprache Java geschrieben sind.

8. Das Verfahren nach Anspruch 1, wobei der Schritt des Ziehens enthält:
Ziehen eines für das Steuerobjekt typischen Icons von einem angezeigten Fenster des Ursprungsprogramms; Registrieren des Steuerobjekts mit einer Ziehsteuerung;
Ablegen des für das Steuerobjekt typischen Icons auf einem Teil des angezeigten Fensters des Zielprogramms, das es akzeptieren kann; und
Erzeugen einer Instanz des Steuerobjekts in dem Zielprogramm.

9. das Verfahren nach Anspruch 8, wobei der Schritt des Erzeugens einer Instanz des Steuerobjekts ein Kopieren des Steuerobjekts zu dem Zielprogramm enthält, sowie ein Verbinden über eine Schnittstelle mit demselben und Anzeigen eines für das Steuerobjekt typischen Icons in einem Fenster des Zielprogramms.

10. Das Verfahren nach Anspruch 8, ferner enthaltend den Schritt, Abfragen der Schnittstellen des Zielprogramms und Aktivieren des Steuerobjekts zum Betrieb in dem Zielprogramm, falls benötigte Schnittstellen vorliegen.

11. Das Verfahren nach Anspruch 10, ferner den Schritt enthaltend ein Deaktivieren des Steuerobjekts, wenn das Zielprogramm keine der benötigten Schnittstellen aufweist.

12. Das Verfahren nach Anspruch 1, wobei der Schritt des Überprüfens enthält:
Beibehalten einer Vielzahl von Steuerschnittstellen für das Steuerobjekt;
Durchsuchen der Vielzahl der Steuerschnittstellen nach einer mit dem Zielprogramm kompatiblen Schnittstelle; und
Bestimmen einer Steuerschnittstelle für das Steuerobjekt, die kompatibel mit dem Zielprogramm ist.

13. Das Verfahren nach Anspruch 12, ferner umfassend die Schritte:
Definieren einer neuen Steuerschnittstelle; und
Hinzufügen der neuen Steuerschnittstelle zu der Vielzahl von Steuerschnittstellen.

14. Ein System zum Hinzufügen von Steuerobjekten zu Software-Anwendungen, umfassend:
ein Computersystem mit einer Verarbeitungseinheit, einem Auswahlgerät ansprechend auf einen Benutzer und einem Anzeigeschirm;
eine erste Anwendung, die in der Verarbeitungseinheit ausgeführt wird und durch ein erstes Anzeigefenster auf dem Anzeigeschirm repräsentiert wird, wobei die Anwendung eine Anwendungsschnittstelle aufweist;
eine zweite Anwendung, die in der Verarbeitungseinheit ausgeführt wird und durch ein zweites Anzeigefenster auf dem Anzeigeschirm repräsentiert wird, wobei die zweite Anwendung ein Steuerobjekt enthält und eine Steuerschnittstelle aufweist, wobei das Steuerobjekt betreibbar zum Ausführen einer Steuerfunktion ist, wenn das Steuerobjekt durch einen Benutzer mit dem Auswahlgerät ausgewählt wird;
wobei die Verarbeitungseinheit und das Auswahlgerät eine Einrichtung aufweisen, zum Bewegen einer Kopie des Steuerobjekts von der zweiten Anwendung zu der ersten Anwendung und die Kopie des Steuerobjekts an der ersten Anwendung angebracht wird;
das angebrachte Steuerobjekt der ersten Anwendung betreibbar in unabhängigem Betrieb der ersten Anwendung ist, wenn die Schnittstelle der ersten Anwendung kompatibel mit der Steuerschnittstelle der zweiten Anwendung ist.

15. Das System nach Anspruch 14, wobei das Steuerobjekt, das in die erste Anwendung kopiert wird, ein Schnittstellensteuerprogramm enthält, zum Beibehalten einer Vielzahl von Schnittstellendefinitionen und Überprüfen der ersten Anwendungsschnittstelle für entsprechende Definitionen bevor die Funktion des Steuerobjekts in der ersten Anwendung ermöglicht wird.

16. Das System nach Anspruch 15, wobei das Steuerobjekt den Betrieb seiner Funktion ermöglicht, durch Verifizieren, dass die Schnittstelle der ersten Anwendung kompatibel mit mindestens einer der Vielzahl von Schnittstellendefinitionen des Steuerobjekts ist.

## Revendications

1. Procédé de mise en fonctionnement d'un système informatique comportant un processeur, un dispositif de pointage de curseur, un écran d'affichage et un système d'exploitation destiné à exécuter différents programmes dans des fenêtres du dispositif d'affichage et à mettre en oeuvre des opérations glisser-déposer pour des objets desdits programmes, ledit procédé déplaçant un objet sélectionné ayant pour fonction d'exécuter une fonction de commande d'un programme de départ vers au moins un programme cible pour une opération indépendante dans le programme cible sans recompiler le programme, ledit procédé comprenant les étapes consistant à :
exécuter simultanément le programme de départ et au moins un programme cible dans des fenêtres d'affichage distinctes dudit système d'exploitation ;
glisser un objet de commande sélectionné dudit programme de départ vers ledit programme cible ;
vérifier la compatibilité fonctionnelle de l'objet de commande sélectionné avec le programme cible ;
rattacher automatiquement un code exécutable de l'objet de commande sélectionné au programme cible ; et
exécuter sélectivement le code exécutable de l'objet de commande lorsque l'objet de commande est activé dans le programme cible.

2. Procédé selon la revendication 1, dans lequel ladite étape de glissement consiste à déplacer une icône représentative de l'objet de commande depuis le programme de départ vers le programme cible.

3. Procédé selon la revendication 1, dans lequel ladite étape de glissement consiste à glisser une icône représentative de l'objet de commande depuis le programme de départ et à déposer ladite icône dans une partie d'affichage du programme cible.

4. Procédé selon la revendication 3, comprenant en outre l'étape consistant à désactiver l'objet de commande dans le programme cible si les programmes de départ et cible ont des interfaces de commande incompatibles.

5. Procédé selon la revendication 1, dans lequel ladite étape d'exécution sélective comprend l'étape consistant à ne faire fonctionner l'objet de commande dans le programme cible que si les programmes de départ et cible ont des interfaces de commande compatibles.

6. Procédé selon la revendication 1, dans lequel ladite étape de glissement consiste à glisser une icône représentative de l'objet de commande depuis une partie d'un panneau de commande de la fenêtre du programme de départ et à la déposer dans une partie d'un panneau de commande de la fenêtre du programme cible.

7. Procédé selon la revendication 1, dans lequel lesdits programmes de départ et cible sont écrits dans le langage de programmation Java.

8. Procédé selon la revendication 1, dans lequel ladite étape de glissement consiste à :
glisser une icône représentative de l'objet de commande depuis une fenêtre affichée du programme de départ ;
enregistrer l'objet de commande auprès d'un programme de commande de glissement ;
déposer l'icône représentative de l'objet de commande sur une partie d'une fenêtre affichée du programme cible pouvant l'accepter ; et
créer une instance de l'objet de commande dans le programme cible.

9. Procédé selon la revendication 8, dans lequel l'étape de création d'une instance de l'objet de commande consiste à copier l'objet de commande vers le programme cible, à l'interfacer avec celui-ci et à afficher une icône représentative de l'objet de commande dans une fenêtre du programme cible.

10. Procédé selon la revendication 8, comprenant en outre l'étape consistant à interroger les interfaces du programme cible et à activer l'objet de commande pour qu'il fonctionne dans le programme cible si des interfaces nécessaires sont présentes.

11. Procédé selon la revendication 10, comprenant en outre l'étape consistant à désactiver l'objet de commande si le programme cible n'a pas les interfaces nécessaires.

12. Procédé selon la revendication 1, dans lequel ladite étape de vérification consiste à :
maintenir une pluralité d'interfaces de commande pour l'objet de commande ;
rechercher dans ladite pluralité d'interfaces de commande une interface compatible avec le programme cible ; et
désigner pour l'objet de commande une interface de commande qui est compatible avec le programme cible.

13. Procédé selon la revendication 12, comprenant en outre les étapes consistant à :
définir une nouvelle interface de commande ; et
ajouter la nouvelle interface de commande à ladite pluralité d'interfaces de commande.

14. Système pour ajouter des objets de commande à des applications informatiques, comprenant :
un système informatique ayant une unité de traitement, un dispositif de sélection répondant à un utilisateur, et un écran d'affichage ;
une première application s'exécutant dans l'unité de traitement et représentée par une première fenêtre d'affichage sur l'écran d'affichage, l'application ayant une interface d'application ;
une seconde application s'exécutant dans l'unité de traitement et représentée par une seconde fenêtre d'affichage sur l'écran d'affichage, la seconde application comprenant un objet de commande et ayant une interface de commande, l'objet de commande pouvant être mis en fonctionnement pour exécuter une fonction de commande lorsque ledit objet de commande est sélectionné par un utilisateur avec le dispositif de sélection ;
l'unité de traitement et le dispositif de sélection comportant des moyens pour déplacer une copie dudit objet de commande de ladite seconde application vers ladite première application et pour rattacher ladite copie de l'objet de commande à la première application ;
l'objet de commande rattaché de la première application pouvant être mis en fonctionnement lors d'une opération indépendante de la première application lorsque l'interface de la première application est compatible avec l'interface de commande de la seconde application.

15. Système selon la revendication 14, dans lequel l'objet de commande copié vers la première application comprend un programme de commande d'interface pour maintenir une pluralité de définitions d'interfaces et vérifier la première interface d'application en ce qui concerne des définitions correspondantes avant d'activer la fonction de l'objet de commande dans la première application.

16. Système selon la revendication 15, dans lequel l'objet de commande permet la mise en oeuvre de sa fonction en vérifiant que l'interface de la première application est compatible avec au moins l'une de ladite pluralité de définitions d'interfaces de l'objet de commande.
